# EUROPEAN PATENT APPLICATION

(11) **EP 4 834 517 A1**
(43) Date of publication of application: **04.11.2026**
(21) Application number: 24911034.7
(22) Date of filing: 23.12.2024
(51) Int. Cl.: B23K 26/06, B23K 26/21, H01S 3/067

(54) **OPTICAL FIBER LASER DEVICE, LASER BEAM MACHINING SYSTEM, AND LASER WELDING METHOD**

(30) Priority: 28.12.2023 CN 202311829539; 28.12.2023 CN 202311832037; 30.01.2024 CN 202410127104; 30.01.2024 CN 202410127106; 07.03.2024 CN 202410259265
(71) Applicant: Wuhan Maxphotonics Technology Co., Ltd., Wuhan, Hubei 430205 (CN)
(72) Inventor: JIANG, Feng, Wuhan, Hubei 430205 (CN); ZHANG, Xinbi, Wuhan, Hubei 430205 (CN); YANG, Di, Wuhan, Hubei 430205 (CN); HUANG, Zhiyong, Wuhan, Hubei 430205 (CN); LV, Zhangyong, Wuhan, Hubei 430205 (CN); ZOU, Chen, Wuhan, Hubei 430205 (CN); HE, Jun, Wuhan, Hubei 430205 (CN); WANG, Ping, Wuhan, Hubei 430205 (CN); QIAO, Yu, Wuhan, Hubei 430205 (CN)
(74) Representative: Wallinger Ricker Schlotter PartGmbB
(86) International application number: PCT/CN2024/141461
(87) International publication number: WO 2025/140106

(57) **Abstract**

Disclosed are an optical fiber laser device, a laser processing system, and a laser welding method. The optical fiber laser device includes a plurality of laser modules, a laser output head, and a control apparatus. Output optical fibers of the laser modules are symmetrically bundled to form an array optical fiber. The array optical fiber is coupled and connected to the laser output head. The output lasers of a plurality of lasers are emitted through the laser output head to form a preset light spot. The control apparatus is connected to the lasers separately and provides a light spot editing interface. The control apparatus is used for controlling light emission and output power of the lasers and modulating the shape and energy distribution of the preset light spot.

## Description

The present application claims priority to Chinese Patent Application No. 202311829539.3 filed with the China National Intellectual Property Administration (CNIPA) on Dec. 28, 2023, Chinese Patent Application No. 202410994470.8 filed with the CNIPA on Jul. 24, 2024, Chinese Patent Application No. 202410127106.1 filed with the CNIPA on Jan. 30, 2024, Chinese Patent Application No. 202410127104.2 filed with the CNIPA on Jan. 30, 2024, and Chinese Patent Application No. 202410259265.7 filed with the CNIPA on Mar. 7, 2024, the disclosures of which are incorporated herein by reference in their entireties.

### TECHNICAL FIELD

The present application relates to the field of laser processing technology and, in particular, to an optical fiber laser device, a laser processing system, and a laser welding method.

### BACKGROUND

The laser processing technology (for example, laser welding, laser cutting, laser marking, laser drilling, laser dicing, laser ablation, and micromachining) is increasingly widely used in various industries. Different laser processing techniques have different requirements on characteristics such as the shape and energy distribution of the light spot. Some laser processing device platforms with relatively simple functions cannot meet the processing control requirements.

### SUMMARY

On this basis, an object of the present application is to provide an optical fiber laser device, a laser processing system, and a laser welding method.

The present application adopts the technical solutions below.

An optical fiber laser device is provided, including multiple laser modules, a laser output head, and a control apparatus.

Output optical fibers of the multiple laser modules are symmetrically bundled to form an array optical fiber.

The array optical fiber is coupled and connected to the laser output head, and output lasers of multiple lasers are emitted through the laser output head to form a preset light spot.

The control apparatus is connected to the multiple lasers separately and provides a light spot editing interface. The control apparatus is used for controlling light emission and output power of the multiple lasers and modulating a shape of the preset light spot and energy distribution of the preset light spot.

A laser processing system is provided. The laser processing system includes a multi-beam laser and a depth-of-focus adjustment unit.

The multi-beam laser includes multiple lasers. Output optical fibers of the multiple lasers are arranged in an array. Array laser beams output by the output optical fibers form a processing beam.

The depth-of-focus adjustment unit includes depth-of-focus coarse adjustment modules and depth-of-focus fine adjustment modules. The depth-of-focus coarse adjustment modules are connected to the multiple lasers respectively to control a light spot size of the processing beam. The depth-of-focus fine adjustment modules are connected to the multiple lasers respectively to control an energy distribution ratio of the processing beam.

A laser welding method is provided and includes the following:

A to-be-welded material is provided, where the material includes a first welding section and a second welding section having different welding thicknesses.

A welding beam having a first depth of focus is provided to perform welding along a welding path of the first welding section with the first depth of focus.

Output power of the welding beam and a light spot diameter and/or light spot energy distribution of the welding beam are simultaneously adjusted to enable the welding beam to be converted from the first depth of focus to a second depth of focus and perform welding along a welding path of the second welding section with the second depth of focus.

A laser welding method is provided and includes the following:

A laser combination is configured according to a condition of a to-be-welded workpiece, where the laser combination is composed of at least a first welding beam and a second welding beam.

The first welding beam and the second welding beam are output simultaneously or separately, where the first welding beam is displaced relative to a material along a preset welding path and acts on the material to form a deep penetration keyhole, and the second welding beam acts on a rear wall of the keyhole for maintaining opening stability of the keyhole.

### BRIEF DESCRIPTION OF DRAWINGS

FIG. 1 is a structural view of an optical fiber laser device according to this embodiment.
FIG. 2 is a structural view illustrating an optical fiber bundle head welded with a quartz end cap according to this embodiment.
FIG. 3 is a view of an optical fiber end cap in which output optical fibers of 19 lasers are arranged in a honeycomb shape according to this embodiment.
FIG. 4 shows a structural view of a laser output head according to this embodiment.
FIG. 5 shows a structural view of an armored cable fixing assembly according to this embodiment.
FIG. 6 shows a perspective assembly view of an armored cable fixing assembly according to this embodiment.
FIG. 7 shows a perspective assembly view of a water-cooling head assembly according to this embodiment.
FIG. 8 shows a structural view of a limit hole of a first limit member according to this embodiment.
FIG. 9 shows an assembly view of a second limit member and a first limit member according to this embodiment.
FIG. 10 is a view illustrating that a control apparatus controls the light spot to rotate to adapt to the processing path according to this embodiment.
FIG. 11 is a preset light spot with a circular shape and a Gaussian energy distribution, which is obtained in one embodiment.
FIG. 12 is a preset light spot with a circular shape and a flat-top energy distribution, which is obtained in one embodiment.
FIG. 13 is a preset light spot with a circular shape and an M-shaped energy distribution, which is obtained in one embodiment.
FIG. 14 is a preset light spot with a strip shape and a flat-top energy distribution, which is obtained in one embodiment.
FIG. 15 is a preset light spot with a multi-point light spot distribution, which is obtained in one embodiment.
FIG. 16 is a preset light spot of a dual-wavelength beam, which is obtained in one embodiment.
FIG. 17 is a preset light spot with an annular shape and a Gaussian energy distribution, which is obtained in one embodiment.
FIG. 18 is a structural view of a laser processing system with a variable depth of focus according to this embodiment.
FIG. 19 is a structural view illustrating an array optical fiber arranged in a rectangular array according to this embodiment.
FIG. 20 is a view illustrating energy distribution of a light spot of a square welding beam with a depth of focus of 10 mm at defocus positions of 0 mm, -5 mm, and 5 mm according to this embodiment.
FIG. 21 is a view illustrating energy distribution of a light spot of a square welding beam with a depth of focus of 20 mm at defocus positions of 0 mm, -10 mm, and 10 mm according to this embodiment.
FIG. 22 is a view illustrating energy distribution of a light spot of a square welding beam with a depth of focus of 12 mm at defocus positions of 0 mm, -6 mm, and 6 mm according to this embodiment.
FIG. 23 is a view illustrating the welding beam control with the output power varying with the thickness of a tailored blank according to this embodiment.
FIG. 24 is a view illustrating the welding beam control with the output power and the depth of focus varying with the thickness of a tailored blank according to this embodiment.
FIG. 25 is a flowchart of a laser welding method for a tailored blank according to this embodiment.
FIG. 26 is a view illustrating a change in the morphology of a molten pool and a keyhole formed during laser welding of a highly reflective material.
FIG. 27 is a flowchart of a laser welding method for reducing keyhole collapse according to this embodiment.
FIG. 28 is a structural view illustrating a change in the morphology of the rear wall of a keyhole by means of a second welding beam according to this embodiment.
FIG. 29 is a view illustrating the heat-affected region distribution of the first welding beam, the second welding beam, and the third welding beam according to this embodiment.
FIG. 30 is a surface microscope image of a weld bead formed by welding parameters described in an example.
FIG. 31 is a metallograph of the cross-section of a weld bead formed by the welding parameters described in the example.
FIG. 32 is a welding view of a high-power laser welding method for a medium-thick plate according to an embodiment of the present application.
FIG. 33 is a view of a laser combination according to an embodiment of the present application.
FIG. 34 is a view illustrating the operation of a laser welding head according to an embodiment of the present application.
FIG. 35 is a microscope image of the front side of a weld seam formed by the welding parameters in the example according to an embodiment of the present application.
FIG. 36 is a metallograph of a molten pool formed by the welding parameters in the example according to an embodiment of the present application.

### Reference list

- 1: optical fiber laser device
- 10: laser
- 101 to 10n: laser module
- 11: optical fiber bundle head
- 20: laser output head
- 201: armored cable fixing assembly
- 2011: fixing tube
- 2012: anti-bending spring
- 2013: Teflon bushing
- 2014: fixing buckle
- 202: water-cooling head
- 2021: cooling cavity
- 2023: metal glue dispensing ring
- 20271: first limit member
- 20272: first limit member
- 20273: first limit member
- 2028: second limit member
- 203: output armored cable
- 2031: armored cable
- 20311: Teflon round tube
- 20312: cable tube
- 2032: array optical fiber
- 21: quartz end cap
- 22: lens group
- 30: control apparatus
- 2: laser processing system with a variable depth of focus
- 60: depth-of-focus adjustment unit
- 61: depth-of-focus coarse adjustment module
- 62: depth-of-focus fine adjustment module
- 700: tailored blank
- 710: first welding section
- 720: second welding section
- 730: thickness transition section
- 100: workpiece
- 200: butt gap
- 110: keyhole
- 1110: real wall of the keyhole
- 120: molten pool
- 130: stable molten pool
- 150: weld seam
- 3: laser welding head
- 160: wire feeding structure
- I0: pre-processing beam
- I1: first welding beam
- I2: second welding beam
- I3: third welding beam

### DETAILED DESCRIPTION

Examples of the present application are described below in detail with reference to the drawings. The same or similar reference numerals indicate the same or similar elements or elements having the same or similar functions. The embodiments described below with reference to the drawings are exemplary.

In the description of the present application, the orientations or position relations indicated by terms such as "center", "above", "below", "left", "right", "vertical", "horizontal", "inside", "outside", and the like are based on orientations or position relations shown in the drawings. These orientations or position relations are intended only to facilitate and simplify description of the present application, and not to indicate or imply that a device or element referred to must have such specific orientations or must be configured or operated in such specific orientations. Thus, these orientations or position relations are not to be construed as limiting the present application. Moreover, terms such as "first" and "second" are used only for the purpose of description and are not to be construed as indicating or implying relative importance. Terms "first position" and "second position" are two different positions.

Unless otherwise specified and limited, terms "mounted", "joined", "connected", and "fixed" are to be understood in a broad sense. For example, the term "connected" may refer to "fixedly connected" or "detachably connected", may refer to "mechanically connected" or "electrically connected", or may refer to "connected directly", "connected indirectly through an intermediary", "connected inside two elements", or "interaction relations between two elements". For those of ordinary skill in the art, specific meanings of the preceding terms in the present application may be construed according to specific circumstances.

In the present application, unless otherwise expressly specified and limited, when a first feature is described as "on" or "under" a second feature, the first feature and the second feature may be in direct contact or may be in indirect contact via another feature between the two features instead of being in direct contact. Moreover, when the first feature is described as "on", "above", or "over" the second feature, the first feature is right on, above, or over the second feature, the first feature is obliquely on, above, or over the second feature, or the first feature is simply at a higher level than the second feature. When the first feature is described as "under", "below", or "underneath" the second feature, the first feature is right under, below, or underneath the second feature, the first feature is obliquely under, below, or underneath the second feature, or the first feature is simply at a lower level than the second feature.

The technical solutions of the present application are further described below through embodiments in conjunction with the drawings.

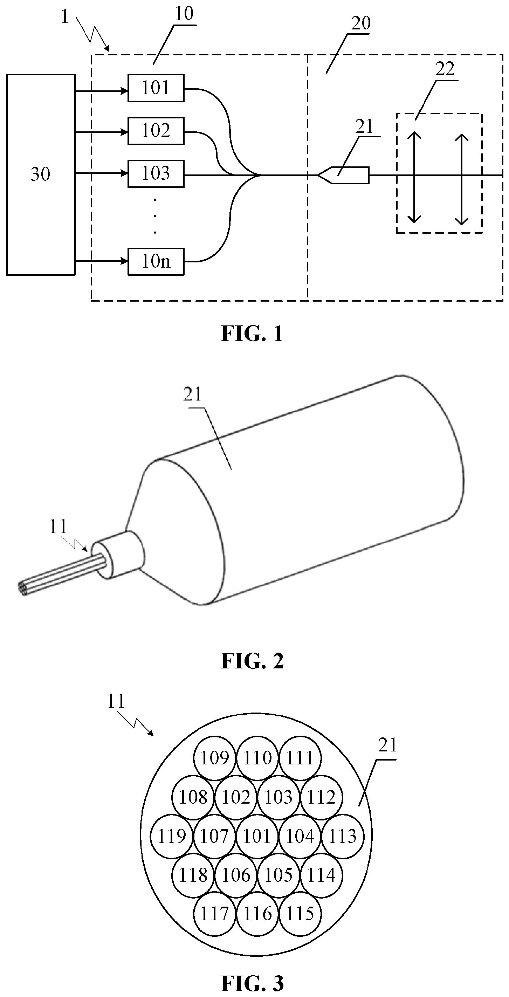

As shown in FIG. 1, the present application provides an optical fiber laser device 1 suitable for a precision laser processing system, which is used to solve the problems of high cost and large occupation space of an implementation solution for light spot rotation. The optical fiber laser device 1 includes a laser 10 including multiple laser modules 101 to 10n, a laser output head 20, and a control apparatus 30. Output optical fibers of the laser modules 101 to 10n are bundled to form an optical fiber bundle head 11 as shown in FIG. 2. The optical fiber bundle head 11 is connected to a quartz end cap 21 directly end-to-end by melting or an adhesive. The quartz end cap 21 is of a centrosymmetric shape. The shape of an end surface of the quartz end cap 21 is adapted to the optical fiber bundle head 11. A quartz glass body having a circular cross section is adopted.

As shown in FIG. 3, the optical fiber bundle head 11 is axisymmetric, centrosymmetric, or rotationally symmetric and may be used to form composite lasers of different shapes, such as a honeycomb regular hexagonal array and a circular array. The laser modules 101 to 10n may adopt either optical fiber laser devices or semiconductor lasers. The output optical fibers of the laser modules 101 to 10n may be either single-mode output optical fibers or multi-mode output optical fibers. The laser modules 101 to 10n may have either the same laser output wavelength or different laser output wavelengths. For example, the laser modules 101 to 10n are divided into two groups, where the central wavelength of output wavelengths of one group is 1064 nm, and the central wavelength of output wavelengths of the other group is 780 nm. In this case, a dual-wavelength laser is formed. The laser modules 101 to 10n may adopt either output optical fibers of the same size and model or output optical fibers of different sizes and models. The output optical fibers of the same size are adopted to form a honeycomb regular hexagonal array, which can maximize the utilization of array arrangement to implement the output of various shapes of light spots.

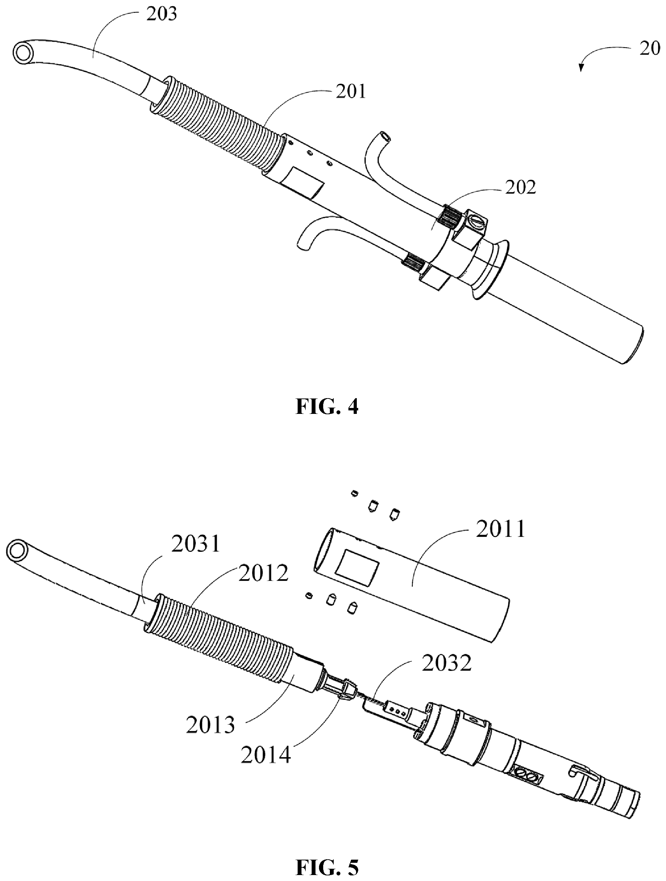

As shown in FIG. 4, this embodiment provides a laser output head based on an array optical fiber. The structural design of the laser output head is used for being fixed to the array optical fiber, guaranteeing the stability of the array optical fiber to prevent an end portion of the array optical fiber, that is, the welding portion between the optical fiber bundle head and the end cap, from breaking. Meanwhile, heat generated at the output portion of the array optical fiber is dissipated.

As shown in FIGS. 4 and 5, the laser output head 20 includes an armored cable fixing assembly 201 and a water-cooling head 202. An output armored cable 203 fixed in the laser output head 20 is divided into two parts, an armored cable 2031 and an array optical fiber 2032 exposed after components such as a cable tube are peeled off.

As shown in FIG. 5, the armored cable fixing assembly 201 includes a fixing tube 2011. The fixing tube 2011 is hollow inside. A hole slot is provided at the upstream position of the fixing tube 2011. The hole slot fixes the armored cable 2031 inside the fixing tube 2011 through a set screw. The tail end of the fixing tube 2011 is connected to the water-cooling head 202 through mechanical threads.

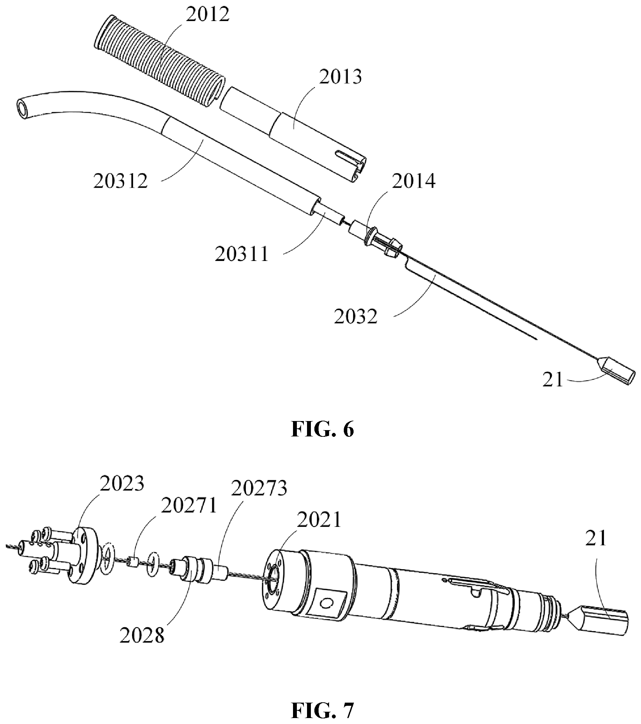

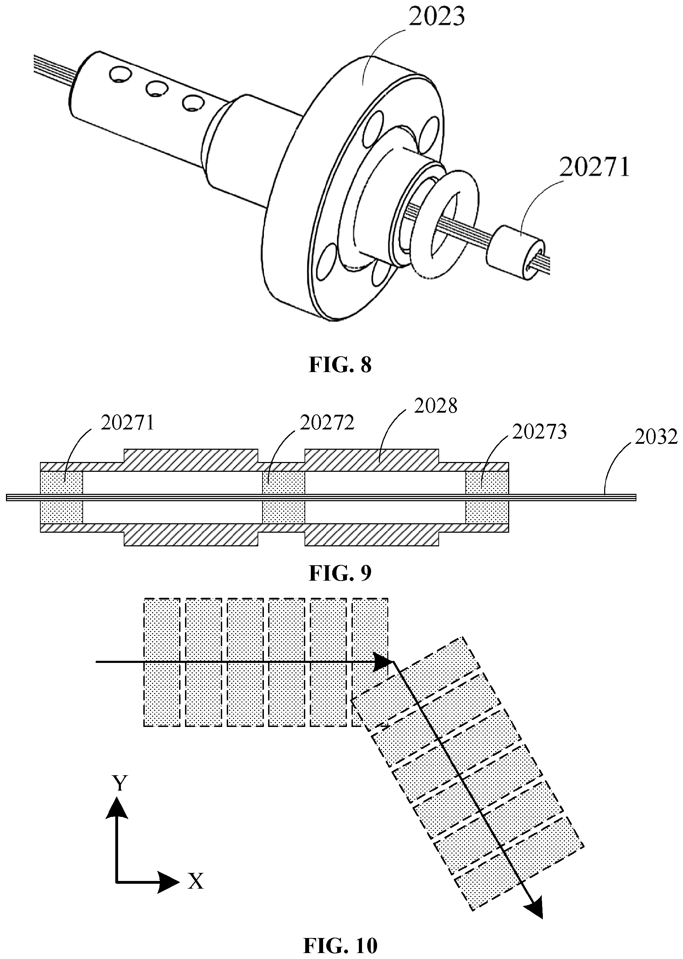

As shown in FIG. 6, the armored cable fixing assembly 201 further includes an anti-bending spring 2012, a Teflon bushing 2013, and a fixing buckle 2014 that are disposed in the fixing tube 2011. The armored cable 2031 includes a Teflon round tube 20311 and a cable tube 20312 sequentially nested around the array optical fiber. The tail end of the Teflon round tube 20311 is connected to the fixing buckle 2014. Based on FIG. 9, the output armored cable 203 located on the left side of the fixing buckle 2014 is the armored cable 2031, and the output armored cable 203 located on the right side of the fixing buckle 2014 is the exposed array optical fiber 2032. The anti-bending spring 2012 and the Teflon bushing 2013 are nested outside the cable tube 20312. The tail end of the anti-bending spring 2012 is sleeved around the outer periphery of the Teflon bushing 2013 to prevent the armored cable fixing assembly 201 and the output armored cable 203 from bending and breaking at the connection position. The Teflon bushing 2013 is used for spacing the anti-bending spring 2012 apart from the cable tube 20312 and reducing friction.

As shown in FIGS. 5 to 7, the water-cooling head 202 includes a housing. The housing penetrates axially through the water-cooling head 202 and has a hollow structure. The housing is provided with a cooling cavity 2021. An independent cooling medium channel is disposed at the outer periphery of the cavity wall of the cooling cavity 2021. The cooling medium channel is connected to a cooling water joint for introducing cooling water. Cooling capacity is provided for the cooling cavity 2021 through the circulation of the cooling water to guarantee the stability and service life of the laser output head.

As shown in FIG. 7, a first fixing member and a second fixing member are provided at the inlet position and the outlet position of the cooling cavity 2021, respectively, for performing two-point fixing on the array optical fiber. In the present application, the first fixing member is a metal glue dispensing ring 2023. An end of the glue dispensing ring facing the inlet of the cooling cavity 2021 is provided with a mounting structure. The mounting structure directly fixes and mounts the first fixing member on the housing and seals the cooling cavity 2021 through a sealing apparatus, such as a sealing ring. The mounting structure includes at least one of a flange, a thread, a connection hole, a riveting structure, or a snap-fit structure. In this embodiment, a flange structure abuts against the inlet end of the cooling cavity and is fixed and mounted on the housing through a fixing screw.

An end of the glue dispensing ring facing away from the mounting structure is provided with an extension portion. A plurality of glue injection holes are disposed on the peripheral side of the extension portion. An end surface of the extension portion is provided with a through hole to allow the array optical fiber 2032 to pass through. The glue injection holes communicate with the through hole. During mounting, the array optical fiber 2032 is inserted through the through hole. Curing glue is injected through the glue injection holes to fix the position of the array optical fiber 2032. That is, the glue dispensing ring not only functions to fix the array optical fiber 2032 but also seals the cooling cavity 2021, guaranteeing that external water vapor and dust do not affect the optical path disposed inside the cooling cavity 2021.

The opening shape of the through hole may be selected to be adapted to the contour shape of the array optical fiber 2032. That is, when the array optical fiber 2032 adopts a regular hexagonal array, the opening shape of the through hole is correspondingly a regular hexagon. When the array optical fiber 2032 adopts a rectangular array, the fixed opening shape is correspondingly a rectangle. The curing glue flows into a gap between the through hole and the array optical fiber 2032 to serve as a filler, fixes the array optical fiber 2032 after solidification, and seals the through hole, thereby guaranteeing the sealing performance of the cooling cavity 2021.

As shown in FIG. 7, the optical fiber bundle head 11 is disposed at a position of the cooling cavity 2021 facing the outlet and serves as the second fixing member. The quartz end cap 21 is welded and fixed to one end of the array optical fiber 2032. In this case, two ends of the array optical fiber are fixed.

Optionally, the second fixing member may also be an optical fiber connector and be configured to couple and connect the array optical fiber to a pigtail of the end cap, that is, the optical fiber bundle head, and to fix the array optical fiber.

Compared with a laser light spot formed by a single fiber, the laser light spot formed by the array optical fiber has directionality. A strip-shaped light spot is taken as an example. Since the formed light spot is strip-shaped, it is necessary to preset and mark the position of a wide side or a narrow side of the strip-shaped light spot. During the assembly of the array optical fiber, as shown in FIG. 7, the end cap is not of a conventional cone-column shape. An alignment portion is disposed on the inner wall of the cooling cavity 2021. An alignment matching portion is disposed on the optical fiber bundle head 11 for alignment with the cooling cavity 2021 to perform calibration and alignment, guaranteeing the strip-shaped light spot emitted in a preset direction.

Optionally, the welding portion of the quartz end cap 21 is conical or may be in a structural form with a small end surface on the top of the cone.

As shown in FIGS. 7 and 8, at least one first limit member is disposed between the inlet position of the cooling cavity 2021 and the outlet position of the cooling cavity 2021. In this embodiment, a plurality of first limit members spaced apart are provided, and a limit through hole used for allowing the array optical fiber to pass through is provided on the first limit member. The arrangement of the limit holes spaced apart at multiple positions enables a larger shaking amplitude of the array optical fiber 2032 to be decomposed and reduced into several smaller shaking amplitudes, thereby reducing the stress generated at the welding surface between the array optical fiber 2032 and the quartz end cap 21 and guaranteeing that the welding surface does not break.

Three first limit members 20271, 20272, and 20273 are taken as an example. The limit holes of the first limit member 20271, the first limit member 20272, and the first limit member 20273 are opened in an axial direction. The opening shape of the limit holes is adapted to the contour shape of the array optical fiber 2032. The opening size of the limit hole is slightly larger than the size of the array optical fiber 2032. After the array optical fiber 2032 passes through the limit holes, the array optical fiber 2032 is allowed to shake to a certain degree, without an excessively large shaking amount. When the array optical fiber 2032 is fixed at the two points in the cooling cavity 2021 via the through hole and the quartz end cap 21, the array optical fiber 2032 may generate a relatively large shaking amplitude since the array optical fiber 2032 located in the cooling cavity 2021 is not in a straightened and tensioned state. The first limit members 20271, 20272, and 20273 located in the cooling cavity 2021 are spaced apart so that a larger shaking amplitude of the array optical fiber 2032 is decomposed and reduced into four sections of smaller shaking amplitudes, thereby greatly reducing the stress generated at the welding surface between the array optical fiber 2032 and the quartz end cap 21 and guaranteeing that the welding surface does not break.

The first limit member 20273 adjacent to the quartz end cap 21 not only has a limit function but also receives the return light formed at the position of the welding surface between the array optical fiber 2032 and the quartz end cap 210, thus serving as a diaphragm. The energy of the return light is absorbed by the limit member 20272, causing a temperature rise. Therefore, the first limit member 20273 made of a brass material facilitates heat dissipation through the cooling cavity 2021. The first limit members 20271 and 20272 receive less return light. Accordingly, the first limit members 20271 and 20272 are not necessarily made of a brass material and may be made of a ceramic material to reduce contamination of the cooling cavity due to metal debris caused by friction.

In some embodiments, as shown in FIG. 9, a second limit member 2028 is further disposed in the cooling cavity 2021. The second limit member 2028 is relatively long. The shape of the outer wall of the second limit member 2028 matches the shape of the inner wall of the cooling cavity 2021. The second limit member 2028 separates the first limit members from the inner wall of the cooling cavity 2021 and allows the first limit members 20271, 20272, and 20273 to slightly rotate in the cooling cavity 2021, thereby allowing a slight deformation of the array optical fiber 2032. Moreover, a first limit member 127 is disposed at a position of the second limit member 2028 closer to the optical fiber bundle head 11. Both the second limit member 2028 and the first limit member 20273 receive the return light. To reduce the attenuation of heat transfer at a medium interface, the second limit member 2028 and the first limit member 20273 closer to the optical fiber bundle head 11 may be made of the same material or may be directly designed as an integrated structure.

In this embodiment, a limit through hole penetrating through the second limit member 2028 is also provided inside the second limit member 2028. The inner diameter of the through hole may be consistent or variable to provide a better diaphragm effect. Moreover, the second limit member 2028 may be completely around the outer peripheries of the first limit members 20271, 20272, and 20273. That is, the first limit members may be completely accommodated in the limit through hole of the second limit member 2028. Alternatively, the second limit member 2028 may be partially around the outer peripheries of the first limit members 20271, 20272, and 20273. That is, part of the first limit members 20271, 20272, and 20273 is accommodated in the second limit member 2028, and the other part of the first limit members 20271, 20272, and 20273 extends out of the second limit member 2028, thereby implementing axial rotation more flexibly.

In this embodiment, the first limit members are arranged as buffer diaphragms, which can buffer the interaction between the array optical fiber and the second limit member. The arrangement of the second limit member can isolate the interaction between the array optical fiber and the inner cavity of the water-cooling head and avoid the effect of the interaction between the array optical fiber and internal components of the laser, thereby facilitating the uniformity of the laser beam.

In this embodiment, optionally, the second limit member 2028 is made of a metal material or a plastic material with good heat dissipation performance, such as copper, a copper alloy, aluminum, an aluminum alloy, or red copper. The first limit members 20271, 20272, and 20273 are made of a high-temperature-resistant ceramic material. The high-temperature-resistant ceramic has the features of wear resistance and high-temperature resistance. Even if the array optical fiber shakes, the friction dust generated by the array optical fiber is relatively small, helping keep the inner cavity clean. The second limit member 2028 with good heat dissipation performance can quickly conduct the heat generated by the return light entering the inner cavity of the second limit member 2028. Optionally, the first limit members 20271, 20272, and 20273 may also be replaced by a Teflon material, a Teflon coating, or other composite materials.

The laser output head 20 described above adopts a quartz block head (QBH)-type laser head structure. For a laser adapter head structure of quartz collimator system (QCS) model, quick disconnect (QD) model, or other models, several first limit members matching the contour of the array optical fiber are also disposed in the cooling cavity thereof. The specific structural configuration is not repeated in detail here.

In the laser output head according to the present application, a plurality of first limit members are provided. The first limit members are each provided with a limit hole. The shape of the limit hole is the same as the contour shape of the array optical fiber. The limit holes limit the array optical fiber at multiple positions respectively so that the array optical fiber can have a certain shaking space inside the output head, thereby avoiding the detachment of the welding surface due to tension and preventing the welding surface from breaking due to excessive shaking.

The control apparatus 30, as shown in FIG. 10, includes at least a first control module for controlling the translation of a preset light spot in the direction of the X axis and a second control module for controlling the translation of the preset light spot in the direction of the Y axis. Through the cooperation of the first control module and the second control module, the preset light spot can be moved from the X axis to the Y axis on a first processing plane constituted by the X axis and the Y axis or can be obliquely moved at any angle.

Further, the control apparatus 30 may also include a third control module for controlling a change in the position of the focal point of the preset light spot (that is, controlling a change in the distance between the laser output head and a target working surface). Correspondingly, through the cooperation of the first control module, the second control module, and the third control module, the preset light spot can be moved from the first processing plane to a second processing plane constituted by the X axis and the Z axis or to a third processing plane constituted by the Y axis and the Z axis and can be obliquely moved at any angle on the second processing plane or the third processing plane.

Through the control apparatus 30, the laser output head 20 can change the movement direction of the preset light spot without adjusting the emission angle. In this manner, the rotation of the preset light spot on a planar or non-planar processing surface can be implemented without the arrangement of a rotation axis. The cost of the device is low, and no device space is occupied.

In this embodiment, the control apparatus 30 is connected to the laser output head 20 and each laser module separately so that an editing interface is opened for the laser output head 20 or the laser to implement light spot rotation through the editing interface. The on-off and output power of each laser is controlled to modulate the shape and energy distribution of the preset light spot, thus implementing the movement of the preset light spot on the processing surface to match the laser processing path.

Specifically, in this embodiment, the control apparatus 30 controls the on/off of each laser module 101 to 10n so as to control the shape of the light spot of the laser beam output by the laser output head 20. The control apparatus 30 controls the output power of each laser module 101 to 10n so as to control the energy distribution of the light spot of the laser beam output by the laser output head 20. The control apparatus 30 tunes the on/off and output power of each laser module 101 to 10n so that the laser emitted by the laser output head 20 can form different shapes and energy distributions of the light spot. The light spot may be, for example, circular, annular, strip-shaped, and multi-point shaped. The energy distribution may be, for example, a Gaussian distribution, a flat-top distribution, and an M-shaped distribution. Moreover, when the processing direction of the laser operation needs to be rotated, the control apparatus 30 synchronously tunes various laser modules 101 to 10n to complete the rotation of the preset light spot. The rotation manner is simple and effective.

The specific structure of the laser 1 and the spot rotation control described in this embodiment are further described hereinafter through embodiments.

In one embodiment, the laser 1 provided in this embodiment includes 19 laser modules 101 to 119. The laser modules 101 to 119 all adopt optical fiber laser devices, with an output wavelength of 1080 nm. The maximum output power of a single laser module is up to 1500 W. The output optical fiber size of a single laser module is 50 µm/250 µm. The fiber core numerical aperture is 0.07. As shown in FIG. 3, the output optical fibers of the laser modules 102 to 119 are distributed at equal intervals around the output optical fiber of the laser module 101. The output optical fibers of the laser modules 108 to 119 are distributed at equal intervals around the output optical fibers of the laser modules 102 to 119. In this case, a honeycomb regular hexagonal optical fiber bundle head 11 is formed. The focal length of a lens group is set to 150 mm.

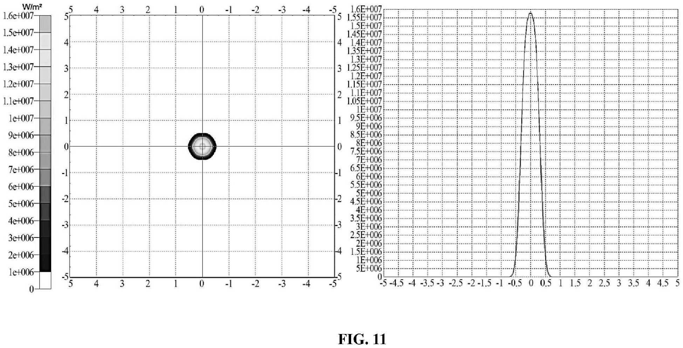

As an example, a steering control apparatus controls the laser modules 101 to 119 to perform output at the same power P0. Then, as shown in FIG. 11, the preset light spot of the laser emitted by the lens group is circular, and the energy distribution is a Gaussian distribution. Since the formed light spot is circular and the energy distribution is a Gaussian distribution, when the laser 1 performs an operation of changing the path direction, the effect of rotation of the preset light spot can be equivalently obtained without changing the output of the laser modules 101 to 119.

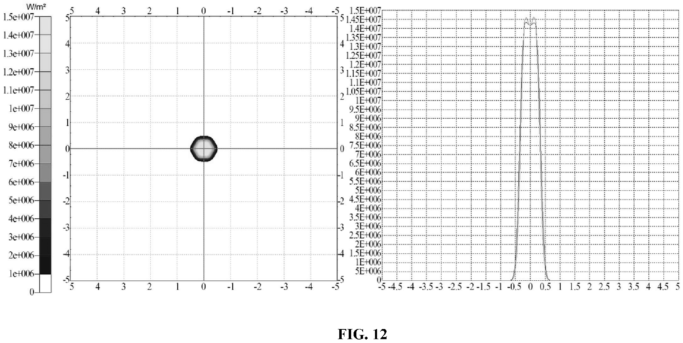

As an example, the control apparatus controls the laser modules 102 to 119 to perform output at the same power P0 and controls the laser module 101 to perform output at 0.8×P0. Then, as shown in FIG. 12, the preset light spot of the laser emitted by the lens group is circular, and the energy distribution is a flat-top distribution. Since the formed light spot is circular and the energy distribution is a flat-top distribution, when the laser 10 performs an operation of changing the path direction, the effect of rotation of the preset light spot can be equivalently obtained without changing the output of the laser modules 101 to 119.

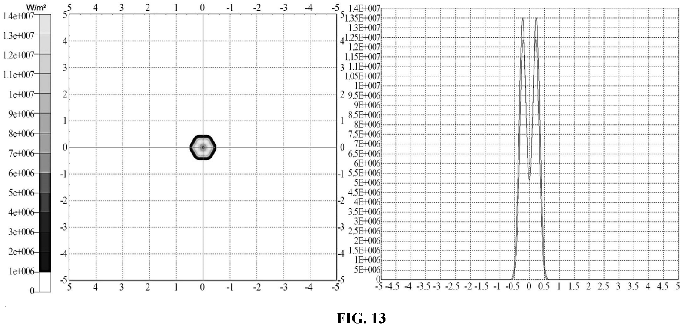

As an example, the control apparatus controls the laser modules 102 to 119 to perform output at the same power P0 and turns off the laser module 101. Then, as shown in FIG. 13, the preset light spot of the laser emitted by the lens group is circular, and the energy distribution is an M-shaped distribution. Since the formed light spot is circular and the energy is flat-top distributed, when the laser 1 performs an operation of changing the path direction, the effect of rotation of the preset light spot can be equivalently obtained without changing the output of the laser modules 101 to 119.

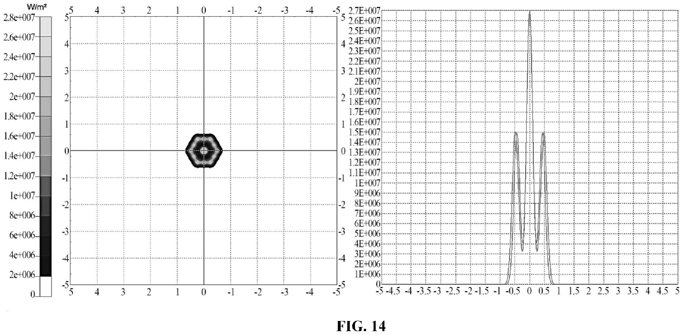

As an example, the steering control device controls the laser modules 108 to 119 to perform output at the same power P0 and turns off the other lasers. Then, as shown in FIG. 14, the preset light spot of the laser emitted by the lens group is annular, and the energy distribution is a Gaussian distribution.

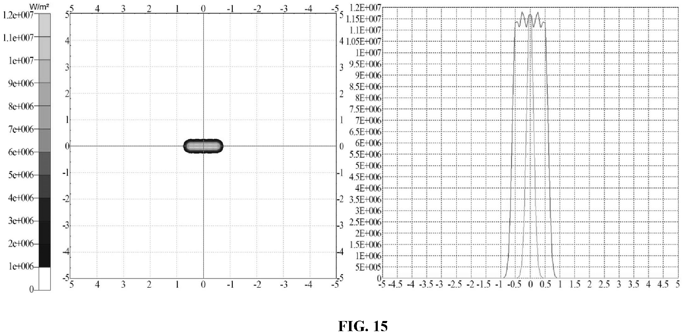

As an example, the control apparatus controls the laser modules 101, 102, and 105 to perform output at the same power P0 and turns off the other lasers. Then, as shown in FIG. 15, the preset light spot of the laser emitted by the lens group is strip-shaped, and the energy distribution is a flat-top distribution. Since the formed light spot is strip-shaped and the energy is flat-top distributed, when the laser 1 performs an operation of changing the path direction, the output of the laser modules 101 to 119 must be changed. For example, when a rotation of 60° is required, the laser modules 103, 102, and 106 need to be controlled to perform output at the same power P0, and the other lasers are turned off.

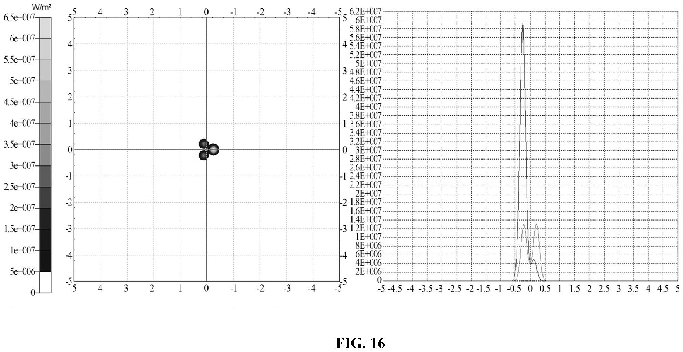

As an example, the control device controls the laser modules 104 and 106 to perform output at the same power P0, controls the laser module 102 to perform output at a power greater than P0, and turns off the other lasers. Then, as shown in FIG. 16, the preset light spot of the laser emitted by the lens group is a multi-point light spot. Since the formed light spot is a multi-point light spot, and the energy is not uniformly distributed, when the laser 1 performs an operation of changing the path direction, the output of the laser modules 101 to 119 must be changed. For example, when a rotation of 60° is required, the laser modules 104 and 106 need to be controlled to perform output at the same power P0, the laser module 1019 needs to be controlled to perform output at a power greater than P0, and the other lasers are turned off.

In another embodiment, the laser module 101 adopts a semiconductor laser. The laser modules 102 to 119 adopt optical fiber laser devices. The output wavelength of the semiconductor laser is 915 nm. The output wavelength of the optical fiber laser devices is 1080 nm. The laser modules 101 to 119 have the same output power and output optical fiber model. The maximum output power of a single laser is up to 1500 W. The output optical fiber size of a single laser is 50 µm/250 µm. The fiber core numerical aperture is 0.07. The output optical fibers of the laser modules 102 to 119 are distributed at equal intervals around the output optical fiber of the laser module 101. The output optical fibers of the laser modules 108 to 119 are distributed at equal intervals around the output optical fibers of the laser modules 102 to 119. In this case, a honeycomb regular hexagonal optical fiber bundle head 11 is formed. The focal length of the lens group is set to 150 mm.

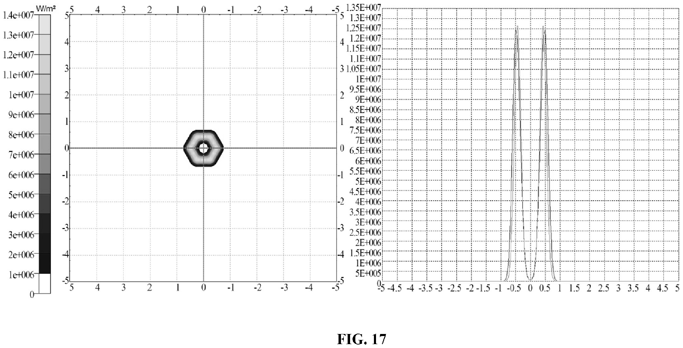

As an example, the control device controls the laser modules 102 and 119 to perform output at the same power P0 and controls the laser module 101 to perform output at a power greater than P0. Then, as shown in FIG. 17, the preset light spot of the laser emitted by the lens group is circular, and a focus light spot is a dual-wavelength circular light spot.

In summary, the optical fiber laser device according to the present application adopts the welding connection of an output optical fiber array of multiple laser modules to a quartz end cap so that a preset light spot is bundled and formed. Moreover, the on-off and power of these laser modules are regulated by the control apparatus. When the processing direction needs to be changed, the light spot can be steered by changing the on-off and power of various laser modules, without providing a rotation axis in the laser processing device. The rotation manner of the light spot is simple, low in cost, and does not occupy device space.

To adapt to welding scenarios with different thicknesses, the laser processing device needs to be capable of adjusting the depth of focus. The following two depth of focus adjustment solutions are typically adopted: In solution one, the depth of focus is adjusted by adjusting the distance between a collimation lens group and a focus lens group within a welding head; in solution two, the depth of focus is adjusted by replacing a focus lens group with a different magnification. With the adoption of solution one, the adjustment of the depth of focus requires a mechanical displacement structure to support the relative displacement of lenses within various lens groups. Due to the limitations in control precision and displacement speed of mechanical displacement, the rapid and precise adjustment of the depth of focus cannot be implemented (the adjustment speed of the depth of focus is limited, and the adjustment precision of the depth of focus is limited), and the hopping adjustment of the depth of focus cannot be implemented (for example, a 10 mm depth of focus is directly switched to a 20 mm depth of focus). With the adoption of solution two, a lens group module needs to be replaced, which is even more cumbersome. The type of the welding head is typically selected only before welding to match processing conditions within a certain depth of focus range. The real-time adjustment of the depth of focus cannot be implemented.

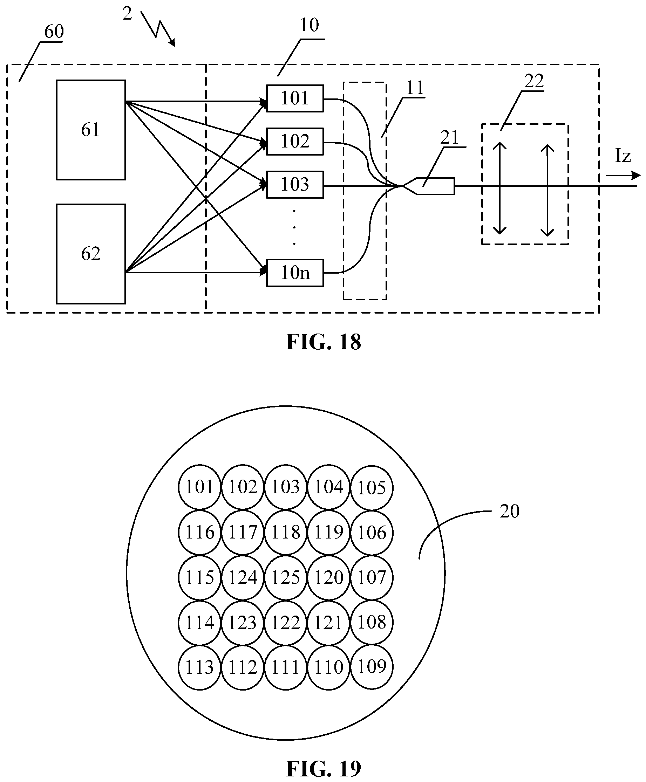

Regarding the preceding problem, as shown in FIG. 18, this embodiment provides a laser processing system 2 with a variable depth of focus. The laser processing system 2 includes a multi-beam laser 10 and a depth-of-focus adjustment unit 60.

The multi-beam laser 10 includes several laser modules 101 to 10n. Laser beams output by the laser modules 101 to 10n form a welding beam Iz.

The depth-of-focus adjustment unit 60 is connected to the multi-beam laser 10. The depth-of-focus adjustment unit 60 includes a depth-of-focus coarse adjustment module 61 and a depth-of-focus fine adjustment module 62. The depth-of-focus coarse adjustment module 61 is connected to the laser modules 101 to 10n separately to control the on-off of each laser module 101 to 10n. The depth-of-focus fine adjustment module 62 is connected to the laser modules 101 to 10n separately to control the output power of each laser module 101 to 10n.

In this embodiment, the depth-of-focus coarse adjustment module 61 controls the light spot size of the welding beam formed by the laser beams output by these lasers by controlling the on-off of each laser module 101 to 10n. It may be understood that for the output optical fibers arranged in an array, when the output optical fibers located at the periphery are switched from emitting light to not emitting light, the formed light spot diameter of the welding beam may decrease accordingly as shown in the following formula: $DOF = \frac{π d}{2 λ {M}^{2}}$. DOF denotes the depth of focus. d denotes the light spot diameter of the welding beam. λ denotes the wavelength of the welding beam. M² denotes the beam quality factor of the welding beam.

It can be known from the preceding formula that when the light spot diameter d decreases, the depth of focus DOF may change correspondingly.

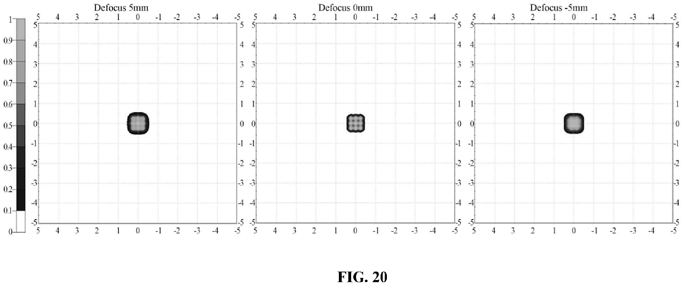

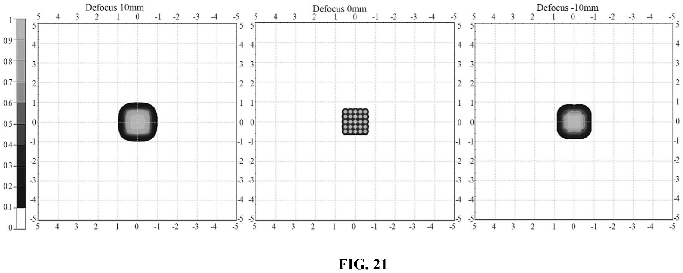

As an example, as shown in FIG. 19, the laser processing system 2 includes 25 laser modules 101 to 125. The laser modules 101 to 125 adopt optical fiber laser devices, with an output wavelength of 1080 nm and an output optical fiber of 50 µm/125 µm. The output optical fibers of the laser modules 101 to 116 are evenly arranged on an outer square. The output optical fibers of the lasers 1017 to 125 are evenly arranged on an inner square. The laser module 1025 is located at the center of the quartz end cap 12. The formed square optical fiber array is welded onto the quartz end cap 12. In the laser output head, the collimation lens has a focal length of 100 mm, and the focus lens has a focal length of 200 mm. The laser modules 101 to 116 are controlled not to emit light. The laser modules 1017 to 125 are configured to emit light at the same output power. Light spots at defocus of 5 mm, 0 mm, and -5 mm are shown in FIG. 20 separately, with the depth of focus of 10 mm. The laser modules 101 to 125 are controlled to emit light at the same output power, which is equivalent to increasing the light spot diameter, thus increasing the depth of focus. Light spots at defocus of 10 mm, 0 mm, and -10 mm are shown in FIG. 21 separately. The depth of focus is 20 mm, which is doubled. Moreover, the output of the laser modules 101 to 125 is controlled based on on-off switching so that an abrupt change in the light spot size can be implemented, thereby implementing an abrupt change in the depth of focus. This arrangement is suitable for welding in processing scenarios with abrupt thickness changes. The adjustment manner of the depth of focus by controlling the light spot diameter has a relatively large adjustment range, making it preferentially applicable to an application scenario with a depth of focus difference of 10 mm or more.

In this embodiment, the depth-of-focus fine adjustment module 62 controls the energy distribution of the welding beam formed by the laser beams output by these lasers by controlling the output power of each laser module 101 to 10n. For the output optical fibers arranged in an array, when the energy distribution of the output welding beam is changed, the depth of focus of the formed welding beam may change accordingly.

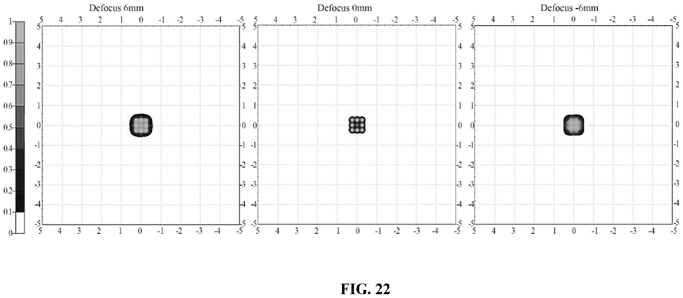

As an example, as shown in FIG. 20, the lasers 1017 to 124 are controlled to emit light at the same output power. The output power of the laser 1025 is controlled to be twice the output power of the lasers 1017 to 124. In this case, compared with the case where the lasers 1017 to 125 perform output at the same power, this is equivalent to changing the power density distribution of the light spot formed by the welding beam, thereby changing the depth of focus. As shown in FIG. 22, light spots at defocus of 6 mm, 0 mm, and -6 mm are shown in the figure separately. The depth of focus is 12 mm, which is increased by 2 mm. Moreover, the output power of the laser modules 101 to 125 can be controlled separately so that an abrupt change in the energy distribution of the light spot can be implemented, thereby implementing an abrupt change in the depth of focus. The change in the depth of focus is timely and does not affect processing efficiency.

In an actual application scenario, the depth-of-focus adjustment unit 60 synchronously coordinates the on-off and power of each laser based on the actual application scenario so that the depth of focus can be adjusted timely with high precision, which is suitable for a welding scenario of an abrupt change in the thickness.

The depth-of-focus coarse adjustment module 61 adjusts the depth of focus of the welding beam over a wide range by controlling the on-off of the lasers, with an adjustment precision within 10 mm. The depth-of-focus fine adjustment module 62 adjusts the depth of focus of the welding beam over a small range by controlling the power distribution of the lasers, with an adjustment precision within 2 mm. When the depth-of-focus adjustment range is greater than 10 mm, coarse adjustment is first performed by the depth-of-focus coarse adjustment module 61, and then precise fine adjustment is performed by the depth-of-focus fine adjustment module 62, thereby implementing the real-time adjustment of the depth of focus quickly and precisely.

In summary, in the laser processing system with a variable depth of focus according to the present application, the welding beam formed by the welding system is formed by bundling multiple beams. The arrangement of a depth-of-focus coarse adjustment apparatus and a depth-of-focus fine adjustment apparatus adjusts the light spot diameter of the welding beam and the energy distribution of the light spot of the welding beam respectively, implementing the adjustment of the depth of focus. Such an adjustment manner abandons the manner of adjusting the depth of focus based on the structural features of a laser output head and an output lens and instead adjusts the depth of focus by changing the beam composition of the welding beam, enabling the precise and rapid continuous adjustment of the depth of focus and implementing high welding quality and high welding efficiency. Therefore, the present application effectively overcomes various shortcomings in the related art and possesses high industrial utilization value.

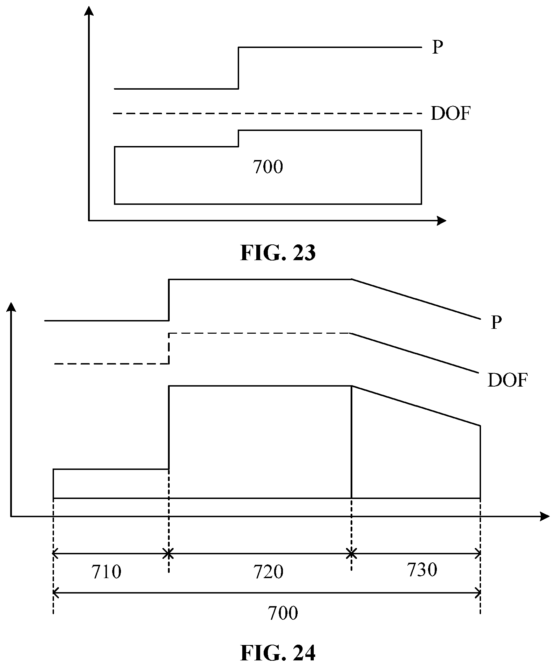

In laser welding, the laser output power may cause a change in the welding penetration state. Excessive output power may lead to collapse or melt-through. Insufficient output power may result in incomplete penetration. Therefore, plates of different thicknesses require different laser output powers. During the laser welding process of a tailored blank 700, as shown in FIG. 23, the abscissa direction is the welding direction. In the welding direction, the thickness of the tailored blank changes. Moreover, when the thickness changes, the output power P also changes accordingly. In the welding process of the tailored blank 700, the laser output power may be precisely controlled and rapidly switched. Therefore, the laser output power can be dynamically adjusted in accordance with the thickness variation of the tailored blank 700, ultimately enabling the laser welding of the tailored blank 700 to achieve good welding quality and welding rate. However, due to the parameter limitation of the depth of focus of the laser beam, the laser power density at different thickness positions of the plate differs. As shown in FIG. 24, when the thickness difference of the tailored blank 700 is relatively large, the difference in power density may significantly affect the welding quality.

Based on the preceding issues, the present application provides a laser welding method. In this welding method, the output power of the welding beam is precisely controlled and rapidly switched, and the depth of focus DOF of the welding beam is also precisely controlled and rapidly switched. In this case, for processing requirements with a relatively large thickness difference, the depth of focus DOF can be quickly and precisely adjusted to prevent a large difference in the laser power density at different thickness positions of the plate from affecting the welding quality.

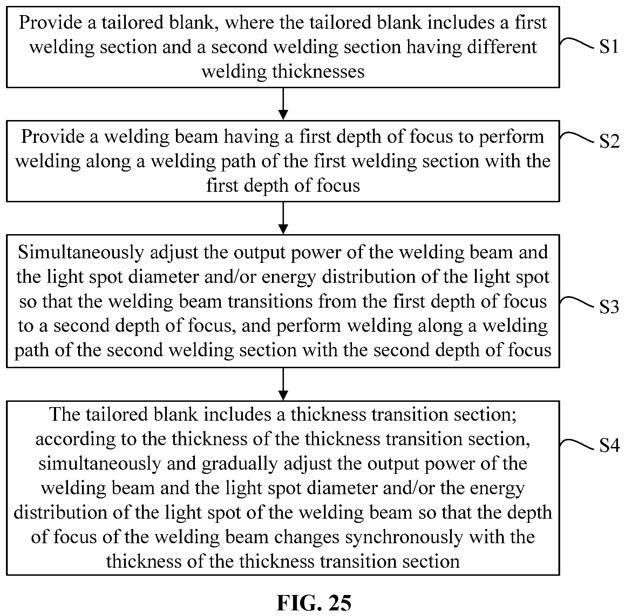

As shown in FIG. 25, this embodiment provides a laser welding method. The laser welding method includes steps S1 to S3. Optionally, step S4 is also included.

In step S1, a tailored blank is provided. The tailored blank 700 includes a first welding section 710 and a second welding section 720 having different welding thicknesses.

In this embodiment, as shown in FIG. 24, the tailored blank 700 includes at least two regions with different welding thicknesses. Distinguishing is performed according to the thickness. A section in the welding path that is earlier in sequence is defined as the first welding section 710. A section in the welding path that is later in sequence is defined as the second welding section 720. It may be understood that the tailored blank 700 generally has multiple regions with different thicknesses. Herein, the thickness difference between the first welding section 710 and the second welding section 720 is only used as an exemplary illustration. Moreover, the tailored blank may further include at least one thickness transition section 730. The thickness of the thickness transition section 730 may change at a uniform rate, forming a sloped profile as shown in FIG. 24. Alternatively, the thickness transition section 730 may have an irregular thickness, forming an uneven profile.

In step S2, a welding beam having a first depth of focus is provided to perform welding along a welding path of the first welding section 710 with the first depth of focus.

In this embodiment, parameters of the welding beam output by a laser are set so that parameters including the output power P, the depth of focus DOF of the beam, and the moving speed of the light spot match the thickness and material density of the first welding section, thereby implementing optimal welding quality and efficiency. When the first welding section is welded, the depth of focus of the welding beam is the first depth of focus.

In step S3, the light spot diameter and/or light spot energy distribution is adjusted while the output power of the welding beam is adjusted, so that the welding beam transitions from the first depth of focus to a second depth of focus, and welding is performed along a welding path of the second welding section with the second depth of focus.

In this embodiment, as shown in FIG. 24, when the thickness changes and the welding path switches from the first welding section 710 to the second welding section 720, the output power of the welding beam and the depth of focus DOF are adjusted at the same time. The first depth of focus of the welding beam is converted to the second depth of focus to match the thickness of the second welding section. As shown in FIG. 24, when the first welding section 710 is connected to the second welding section 720, the thickness changes abruptly. Therefore, the depth of focus DOF of the welding beam also needs to be changed abruptly. The solution of adjusting the distance between the collimation lens group and the focus lens group cannot meet the requirement for such an abrupt depth-of-focus adjustment.

In step S4, according to the thickness change speed of the thickness transition section 730, the light spot diameter and/or the energy distribution of the light spot of the welding beam is gradually adjusted while the output power of the welding beam is gradually adjusted, so that the depth of focus of the welding beam changes synchronously with the thickness change speed.

In this embodiment, as shown in FIG. 24, when the thickness changes gradually, the output power of the welding beam needs to be gradually adjusted according to the change in thickness, and the depth of focus of the welding beam is simultaneously gradually adjusted, so that different thickness positions are matched with appropriate depths of focus, achieving ideal welding quality and efficiency.

In summary, according to the laser welding method described in the present application, when the thickness at the to-be-welded position of the tailored blank changes, not only is the output power of the welding beam dynamically adjusted, but also the light spot diameter and/or light spot energy distribution of the welding beam is dynamically adjusted, thereby implementing the dynamic adjustment of the depth of focus. When the thickness difference of the tailored blank is relatively large, an instantaneous change in the depth of focus can be guaranteed, even if the thickness changes significantly, and the depth of focus can still match the thickness, thereby ensuring the power density of the welding beam. Therefore, the present application can effectively overcome various shortcomings in the related art and has high industrial utilization value.

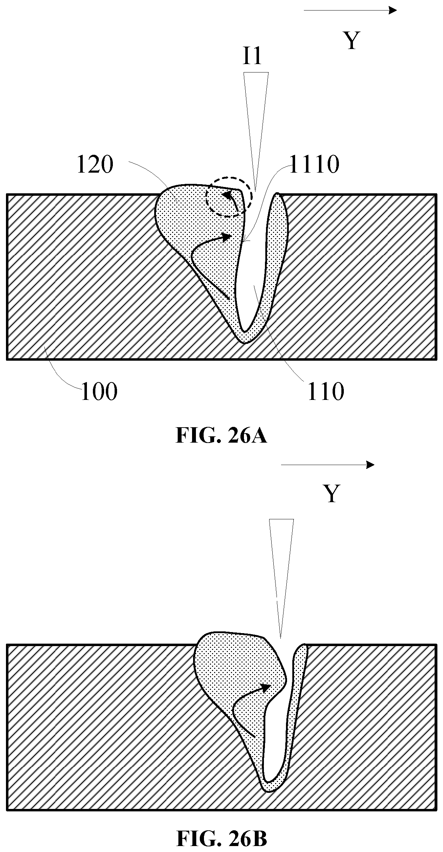

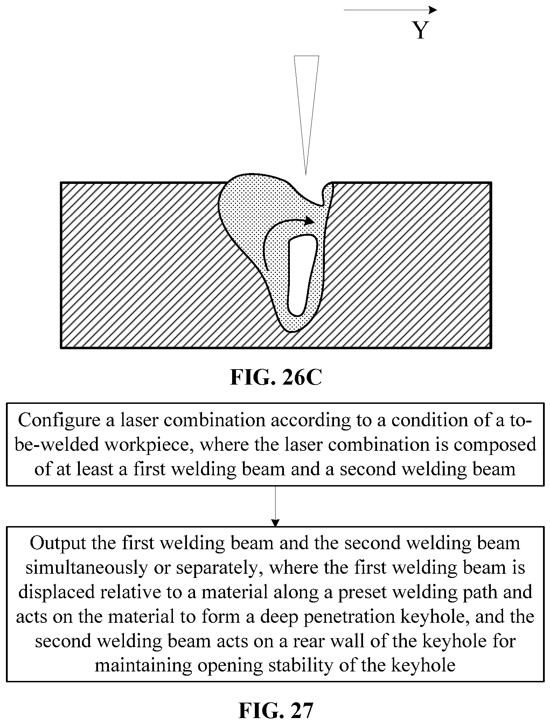

The traditional wavelength band of an optical fiber laser device is a near-infrared laser. Materials such as copper and aluminum have very low absorption efficiency for infrared light at room temperature. Therefore, when high-power laser welding is used (high-power lasers used in industrial applications are mainly fiber laser devices), if the initial power density during welding is not increased, it may easily result in false welding. Copper is taken as an example, its absorption rate for a laser of a 1060 nm wavelength at a solid state and room temperature is about 3%. Typically, it is necessary to ensure the power density as high as 106 w/cm2 so that the copper material can absorb sufficient heat and generate material evaporation, thereby forming a keyhole 110 as shown in FIG. 26. As shown in FIG. 26(a), at the position within the oval dashed box (approximately at the corner where the upper surface of a molten pool 120 meets the rear wall 1110 of the keyhole), the melt flows at the highest velocity, making it more prone to spatter compared to other positions on the surface of the molten pool. Moreover, when the laser enters the formed keyhole 110, the absorption efficiency soars due to refraction and absorption, with the absorption efficiency reaching over 50%. This huge difference in absorption rate leads to drastic heat fluctuations. As shown in FIG. 26(b), these heat fluctuations increase the amount of metal vapor generation and accelerate the flow velocity of the melt, ultimately causing the rear wall 1110 of the keyhole to collapse forward and forming the pores shown in FIG. 26(c). The generation of spatter and pores can adversely affect the welding quality.

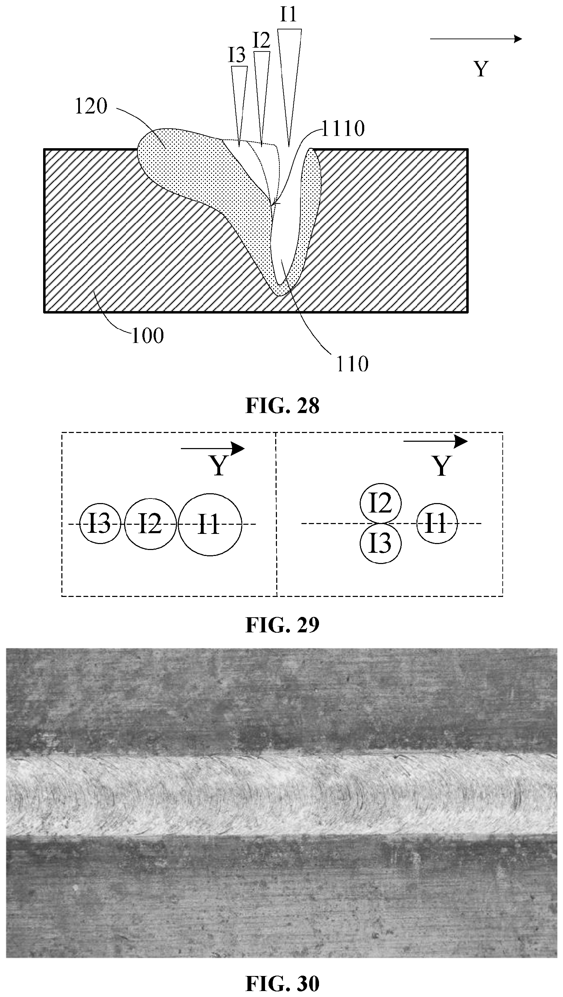

Based on the problems generated during the preceding welding process, the present application provides a laser welding method for reducing keyhole collapse, which is used for solving the problem that in the laser welding process for welding a highly reflective material, the high laser peak power easily causes droplet spattering and results in poor welding quality. As shown in FIGS. 27 and 28, in this welding method, a laser combination is configured according to the condition of a to-be-welded workpiece. The laser combination includes at least a first welding beam I1 and a second welding beam I2. The first welding beam I1 has high power density and evaporates the material to form a keyhole 110. The second welding beam I2 irradiates the rear wall 1110 of the keyhole, has a lower total power relative to the first welding beam, and can vaporize the molten metal located on the rear wall 1110 of the keyhole so that the upper surface of the molten pool 120 and the corner of the rear wall 1110 of the keyhole become smoother, effectively reducing the probability of the generation of spatter. Moreover, after the metal melt on the rear wall 1110 of the keyhole is vaporized, the rear wall 1110 of the keyhole no longer leans forward. The risk of keyhole collapse is reduced, which can effectively reduce the probability of the generation of pores and guarantee stable welding quality.

As shown in FIG. 27, this embodiment provides a laser welding method for reducing keyhole collapse. The laser welding method for reducing keyhole collapse includes steps S1 to S2. In practical applications, the method also includes a preprocessing step S0 for the material.

In step S0, a to-be-welded portion of a workpiece 100 is grinded to remove oil stains on the material surface.

In step S1, a first welding beam I1 is formed. The first welding beam I1 moves relative to the workpiece 100 along a preset welding path to form a keyhole 110 in the workpiece 100.

In this embodiment, the first welding beam I1 moves relative to the material along the direction Y, irradiates the surface of the workpiece 100, and forms the keyhole 110 as shown in FIG. 26(a) in the workpiece 100. During irradiation, coaxial gas blowing is applied to the irradiation position. As an example, the shielding gas flow rate is set to, for example, 15 L/min. The gas pressure is set to, for example, 0.2 MPa. Laser welding is performed when the shielding gas is blown, which can exhaust the gas inside the keyhole 110 and form a good welding seam. Moreover, due to the high reflection characteristics of the workpiece 100 to the near-infrared band, a plasma shielding effect is likely to occur on the surface during welding, affecting the further absorption of the laser by the workpiece 100. The coaxial shielding gas can blow away the surface plasma cloud in time, ensuring stable keyhole formation.

In step S2, a second welding beam I2 is formed. The second welding beam I2 acts on the rear wall 1110 of the keyhole 110 to maintain the opening stability of the keyhole. The power of the second welding beam I2 is less than or equal to the power of the first welding beam I1.

In this embodiment, as shown in FIG. 28, the second welding beam I2 acts on the rear wall 1110 of the keyhole. The power of the second welding beam I2 is greater than the evaporation threshold of the material, evaporating the melt on the rear wall 1110 of the keyhole. After the melt on the rear wall 1110 of the keyhole is evaporated, it is equivalent to directionally widening the opening size of the keyhole 110, making the morphology of the rear wall of the widened keyhole 110 smooth, reducing the flow velocity of the melt at the corner position, and reducing the generation of spatter. Moreover, since part of the melt on the rear wall 1110 of the keyhole is evaporated, a greater force is required inside the melt to make the melt located on the rear wall 1110 of the keyhole lean forward and cover the bottom of the keyhole to form bubbles. Therefore, the second welding beam I2 acting on the rear wall 1110 of the keyhole can effectively alleviate spatter and bubbles and improve the welding quality.

In some embodiments, steps S1 and S2 may also be regarded as being simultaneously performed.

Specifically, in S2, a third welding beam I3 is also formed. The third welding beam I3 is kept at a certain distance from the second welding beam I2. The third welding beam I3 acts on the rear wall of the keyhole 110 to maintain the opening of the keyhole stable and not prone to collapse.

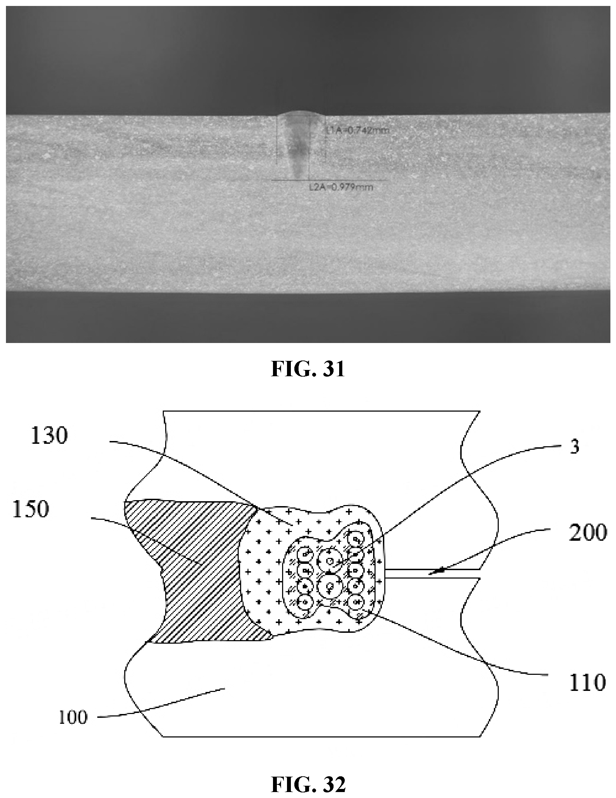

In this embodiment, as a beam arrangement manner, as shown in FIG. 28 and in the dashed box (left) of FIG. 29, the first welding beam I1, the second welding beam I2, and the third welding beam I3 are sequentially spaced apart to form a strip-shaped arrangement. The first welding beam I1 is responsible for forming the keyhole with a relatively large depth-to-width ratio. The second welding beam I2 and the third welding beam I3 sequentially act on the rear wall of the keyhole. The third welding beam I3 further vaporizes the metal melt located on the rear wall 1110 of the keyhole relative to the second welding beam I2, making the keyhole 110 smoother to stabilize the opening of the keyhole 110 and improve the welding quality. Moreover, to keep the width of a fusion region stable and guarantee that the second welding beam I2 and the third welding beam I3 do not increase the width of the fusion region, the power of the second welding beam I2 may be controlled to be less than the power of the first welding beam I1, and the power of the third welding beam I3 may be controlled to be less than the power of the second welding beam I2. As an example, as shown in the dashed box (left) of FIG. 29, the first welding beam I1, the second welding beam I2, and the third welding beam I3 adopt near-infrared lasers, with the power ratio of 900 W: 750 W: 600 W. The areas of heat-affected regions decrease sequentially. The relative distance between the centers of the light spots is set to 500 µm. The welding speed is 80 mm/s. The surface microscope image of a weld bead formed by welding is shown in FIG. 30. The surface of the weld bead is flat. The molten pool is fine. The surface has a metallic luster with no welding defects. The metallograph of the cross section is shown in FIG. 31, no voids exist inside the weld seam, grains are fine and uniform, and the melting depth reaches about 1 mm.

As another beam arrangement manner, as shown in the dashed box (right) of FIG. 29, the first welding beam I1, the second welding beam I2, and the third welding beam I3 are arranged in a triangular array (the center points of the light spots are arranged in a triangular array). The second welding beam I2 and the third welding beam I3 have the same distance from the first welding beam I1 and both act on the rear wall 1110 of the keyhole, providing a larger evaporation area for the melt in the width direction of the fusion region, stabilizing the opening of the keyhole 110, and improving the welding quality. Moreover, for an application scenario of splice welding, a weld seam exists between welding materials. The second welding beam I2 and the third welding beam I3 arranged in a left-right symmetry manner can make welding stable. Especially when a thin plate is welded, it is not easy to cause edge shrinkage and collapse. In some embodiments, to keep the width of the fusion region stable and guarantee that the second welding beam I2 and the third welding beam I3 do not increase the width of the fusion region, the transverse acting width of the second welding beam I2 and the third welding beam I3 is controlled to be smaller than the light spot diameter of the first welding beam I1. That is, the distance between the first welding beam and the second welding beam is adjusted to guarantee that the width of the fusion region is not increased.

When power density is too high, after the formed second welding beam I2 and third welding beam I3 vaporize the metal melt on the rear wall 1110 of the keyhole, a smaller keyhole with a larger depth-to-width ratio may be left. The energy distribution of the light spot of each of the second welding beam I2 and the third welding beam I3 is controlled to be a flat-top distribution. Compared with distributions such as a Gaussian light spot distribution, the flat-top distribution has a wider action area, and the formed smaller keyhole has a relatively small depth-to-width ratio, thereby more effectively guaranteeing a smooth rear wall 1110 of the keyhole.

The present application adopts a first welding beam with higher energy and higher power to overcome the initial resistance caused by the poor absorption performance of the material, thereby implementing the laser welding of high absorption efficiency. Moreover, a second welding beam is formed behind the first welding beam. The second welding beam acts on the rear wall of the keyhole, changing the flow state of the molten pool on the rear wall of the keyhole and slowing down the fluid kinetic energy of the liquid metal located on the rear wall of the keyhole, thus effectively alleviating the generation of pores and spatter and making the laser welding process stable and the welding quality high.

In the traditional technology, welding of a medium-thick plate mainly adopts narrow gap arc welding, in which narrow gap submerged arc welding and narrow gap tungsten inert gas (TIG) welding are the main methods. Narrow gap laser welding and laser-arc hybrid welding have also been applied to some extent in the field of medium-thick plate welding. However, no matter narrow gap arc welding, narrow gap laser wire filling welding, or laser-arc welding that combines two heat sources requires groove preparation in advance and multiple welding passes for filling, resulting in low welding efficiency and large welding deformation, and easily causing defects such as unfused welding pores and sidewalls and unstable melting depth of wire feeding welding.

The present application changes the grinding pretreatment step of the material in the traditional technology to directly outputting a pre-processing beam without grinding. The width of the pre-processing beam covers completely a weld width to be used for cleaning an oxide layer and dirt on a to-be-welded surface. Moreover, a stable molten pool with a shallow melting depth and a large melting area is generated on the surface of the to-be-welded workpiece.

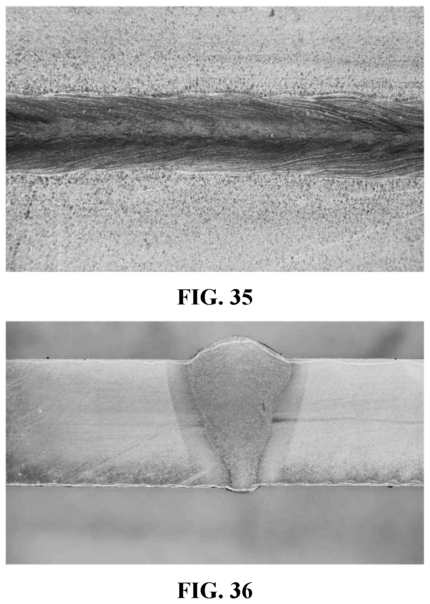

As shown in FIGS. 32 to 36, the to-be-welded workpiece 100 may be various grades of carbon steel, stainless steel, alloy steel, and aluminum alloy already disclosed in the related art, with a thickness of 4.5 mm to 25 mm. The method includes the steps below.

In S1, the width of a butt gap 200 between two to-be-welded workpieces 100 is measured, and a laser combination is configured according to the width of the butt gap 200. The laser combination is composed of at least a pre-processing beam I0 and a first welding beam I1.

In S2, the pre-processing beam I0 and the first welding beam I1 are output simultaneously or separately. The width of the pre-processing beam I0 covers at least completely the butt gap 200 for cleaning the oxide layer and dirt on the to-be-welded surface of each workpiece 100. Moreover, a stable molten pool 130 with a shallow melting depth and a large melting area is formed on the surface of the workpiece 100. The first welding beam I1 is arranged in parallel with the pre-processing beam I0, and the first welding beam I1 acts on the rear portion of the stable molten pool 130 formed by the pre-processing beam I0 in the moving direction of the laser welding head 3 and is used for further vaporizing the material and forming a deep penetration keyhole 110 on the surface of the workpiece 100.

In the preceding steps, specifically in this embodiment, the width of the pre-processing beam I0 covers at least completely the butt gap 200 for cleaning the oxide layer and dirt on the to-be-welded surface of the workpiece 100; and the stable molten pool 130 with a shallow melting depth and a large melting area is formed on the surface of the workpiece 100. After being fully fused in the stable molten pool 130, the molten welding wire liquid and the workpiece 100 are filled into the butt gap 200. The first welding beam I1 is arranged in parallel with the pre-processing beam I0 and acts on the rear portion of the stable molten pool 130 formed by the pre-processing beam I0 in the moving direction of the laser welding head 3, and the first welding beam I1 is used for vaporizing the material and forming the deep penetration keyhole 110 on the surface of the workpiece 100. Since the surface of the workpiece 100 and the welding wire after the action of the pre-processing beam I0 are already in a molten state, the energy of the first welding beam I1 can be fully utilized in this case. Almost all of the laser energy can be absorbed by the metal in a molten state. A larger melting depth can be obtained by using lower laser energy. The first welding beam I1 and the pre-processing beam I0 act together to form one deep penetration keyhole 110. The pre-processing beam I0 acts on the front wall of the deep penetration keyhole 110, maintaining the large opening state. The metal vapor inside the deep penetration keyhole 110 escapes to the surroundings along the sidewall of the keyhole, reducing the shielding effect on the laser and improving the laser energy utilization rate and welding efficiency. The pre-processing beam I0 and the first welding beam I1 can emit light simultaneously or separately at a preset time interval. The selection of light emission time depends on the time required for stabilizing the stable molten pool 130. If the time required for stabilizing the stable molten pool 130 is relatively short, simultaneous light emission may be selected. If the time for stabilizing the stable molten pool 130 is relatively long, the pre-processing beam I0 and the first welding beam I1 are selected to emit light separately at the preset time interval. The preset time interval is greater than or equal to the time for stabilizing the stable molten pool 130. After the stable molten pool 130 becomes stable, the first welding beam I1 emits light, thereby guaranteeing that the laser energy of the first welding beam I1 is fully utilized and that a larger melting depth can be obtained by using lower energy.

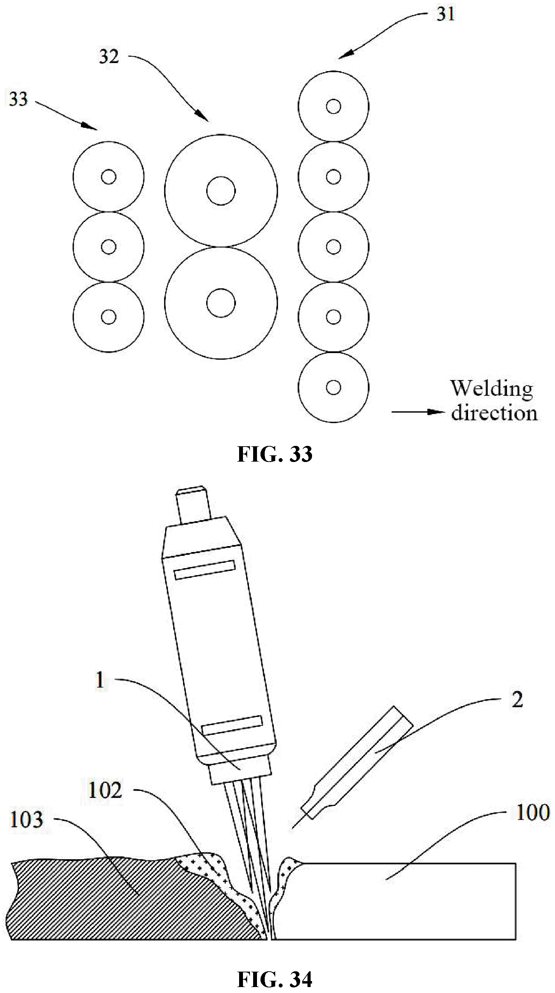

Referring to FIGS. 32 and 33, the laser combination further includes a second welding beam I2 used for maintaining the opening state of the rear wall of the deep penetration keyhole 110. Specifically, in this embodiment, the second welding beam I2 acts on the rear wall of the deep penetration keyhole 110. When the pre-processing beam I0 and the first welding beam I1 move in the extension direction of the butt gap 200, the metal behind the deep penetration keyhole 110 continuously solidifies to form a weld seam 150. The second welding beam I2 can maintain the opening state of the deep penetration keyhole 110 and act together with the pre-processing beam I0 and the first welding beam I1 to form one "Y"-shaped large deep penetration keyhole 110, which can reduce the pressure of the metal vapor inside the deep penetration keyhole 110, reduce the solidification speed of the stable molten pool 130, slow down the cooling rate of the stable molten pool 130, reduce the difficulty of gas escape, thereby effectively avoid spatter during the welding process and the generation of pores in the weld seam 150, and help to optimize the formation of the weld seam 150.

Specifically, in this embodiment, the wire feeding manner is front wire feeding or rear wire feeding, with front wire feeding being preferred. The welding wire is in the front and the laser is in the rear. After absorbing the energy of the pre-processing beam I0, the welding wire melts. Molten droplets enter the stable molten pool 130. Then the first welding beam I1 and the second welding beam I2 begin to act. The duration of the molten state is longer, the fusion between the workpiece 100 and the welding wire is more sufficient, and the formation of the weld seam 150 may also be better. In the rear wire feeding manner, the laser is in the front and the welding wire is in the rear. The welding wire mainly absorbs the energy of the second welding beam I2. As the laser welding head 3 continues to move, wire droplets begin to cool after entering the stable molten pool 130, resulting in a poor cladding effect. The type of the welding wire may be selected as needed according to the material of the to-be-welded workpiece 100. Specifically, the diameters of solid welding wires are generally 0.8 mm, 1.0 mm, 1.2 mm, and 1.6 mm. The diameter of welding wires also affects the wire feeding amount per unit time. If the thickness of the workpiece 100 is great or if the butt gap 200 between two workpieces 100 is large, the welding wire needs to be thickened accordingly. Moreover, the laser power required for melting the welding wire also needs to be increased accordingly.

Specifically, in this embodiment, the total width of the pre-processing beam I0 covers at least completely the butt gap 200. Moreover, the power of the pre-processing beam I0 can melt through the welding wire without melting through the workpiece 100. In combination with the shape, the diameter, and the distance of a single light spot of the first welding beam I1, and the collimation and focusing ratio of the laser welding head 3, the light emission mode, the output power, the beam width, and the shape of the light spot of the first welding beam I1 are determined so that the total width of the first welding beam I1 is less than that of the pre-processing beam I0 but needs to completely cover the butt gap 200, and the power of the first welding beam I1 can reach the required welding depth. Light spots are arranged in a linear array. The first welding beam I1 is arranged in parallel with the pre-processing beam I0. Moreover, in the moving direction of the laser welding head 3, the first welding beam I1 is located 0.5 mm to 1 mm behind the pre-processing beam I0. In combination with the shape, the diameter, and the distance of a single light spot of the second welding beam I2, and the collimation and focusing ratio of the laser welding head 3, the light emission mode, the output power, the beam width, and the shape of the light spot of the second welding beam I2 are determine, so that the total width of the second welding beam I2 is slightly greater than the total width of the first welding beam I1, and the power of the second welding beam I2 is less than the power of the first welding beam I1 and can melt through the welding wire without melting through the workpiece 100. Light spots are arranged in a linear array. The second welding beam I2 is arranged in parallel with the first welding beam I1. Moreover, in the moving direction of the laser welding head 3, the second welding beam I2 is located 0.5 mm to 1 mm behind the first welding beam I1.

It may be understood that the preceding laser combination is composed of multiple laser beams output by a laser based on an array optical fiber. The laser based on the array optical fiber includes several laser modules. The output optical fibers of the laser modules are arranged in an array to form an optical fiber array. The laser modules are independently controlled and adjustable in real time.

Specifically, the pre-processing beam I0, the first welding beam I1, and the second welding beam I2 are formed by lasers from different output optical fibers. The diameters and distances of single-point light spots of the pre-processing beam I0, the first welding beam I1, and the second welding beam I2 depend on the final output pigtail fiber core and outer cladding diameter of a single laser, as well as the collimation and focusing ratio of the laser welding head 3.

Optionally, the light emission mode of the pre-processing beam I0, the light emission mode of the first welding beam I1, and the light emission mode of the second welding beam I2 are each a continuous mode or a pulse mode. Specifically, in this embodiment, the pre-processing beam I0, the first welding beam I1, and the second welding beam I2 are in a continuous mode where the stable molten pool 130 is relatively sound.

Optionally, the width of each welding beam is determined by the diameters and distances of the single-point light spots of multiple lasers. The diameters and distances of the single-point light spots of multiple lasers are determined by the fiber cores and outer cladding diameters of the output optical fibers of several laser modules as well as the collimation and focusing ratio of the laser welding head.

Specifically, light spot diameter = fiber core × (focal length of focus lens / focal length of collimation lens), and light spot distance = outer cladding diameter × (focal length of focus lens / focal length of collimation lens). Exemplarily, the fiber core is generally 20 µm, 50 µm, or 100 µm. The outer cladding is generally 250 µm or 400 µm. The collimation and focusing ratio of the laser welding head 3 is 1:2, 1:2.5, or 1:3, preferably 1:2.

Optionally, the width of the pre-processing beam I0 is greater than the width of the first welding beam I1. The width of the second welding beam I2 is greater than the width of the first welding beam I1 and/or is less than the width of the pre-processing beam I0.

Specifically, the total width of the pre-processing beam I0 needs to cover the butt gap 200 and preferably also cover the edge of the workpiece 100. On one hand, such an arrangement can play a cleaning role for welding before deep penetration; on the other hand, such an arrangement can also allow molten droplets of the workpiece 100 and the welding wire to be fully fused. The total width of the first welding beam I1 is less than the total width of the pre-processing beam I0 and still needs to cover the butt gap 200 to guarantee the depth and width of a stable molten pool 130 and avoid the problem of incomplete penetration at the edge of the weld seam 150. The width of the second welding beam I2 generally only needs to be slightly greater than the width of the first welding beam I1, thereby effectively avoiding collapse of the deep penetration keyhole 110. For example, if the width of the butt gap 200 is 1.5 mm and the light spot distance is 0.5 mm, the pre-processing beam I0 requires simultaneous emission of at least four beams. For the first welding beam I1, considering the relatively large gap, two beams are preferred.

Additionally, the basis for selecting the number of beams for each laser combination is the requirement for the width of the weld seam 150 and whether the gap can be completely covered. The width of the laser combination may be changed by adjusting the number of beams. The width of the weld seam 150 may be finely adjusted in combination with the welding angle of the laser combination. When adjusting the width of the laser combination by adjusting the welding angle, it is necessary to make the projection of the pre-processing beam I0 on the horizontal plane perpendicular to the butt gap 200, thereby guaranteeing that both the first welding beam I1 and the second welding beam I2 are perpendicular to the butt gap 200, thus guaranteeing that two workpieces 100 can be welded together, and also guaranteeing that the projection width of the laser combination on the horizontal plane completely covers the gap.

Optionally, the power of the first welding beam I1 is greater than the power of the pre-processing beam I0 and the power of the second welding beam I2. Preferably, the power of the first welding beam I1 is configured to achieve the required welding depth. The power of the pre-processing beam I0 and the power of the second welding beam I2 are configured to penetrate the welding wire without melting through the plate.

Specifically, the setting of the power of a single laser depends on the thickness of the to-be-welded workpiece 100. The pre-processing beam I0 and the second welding beam I2 only serve as auxiliary roles. The welding wire is melted through without melting through the workpiece 100. The melting depth only needs to reach one third of the thickness of the workpiece 100. The first welding beam I1 is the main welding heat source and needs to reach the set welding depth.

It needs to be noted that as one beam arrangement manner, on the basis of the second welding beam I2, a third welding beam I3 as shown in the dashed box (left) in FIGS. 28 and 29 may also be formed. The third welding beam I3 may, according to the requirements of the welding process, maintain a certain distance from the second welding beam and act together on the rear wall of the keyhole 110, maintaining the opening stability of the keyhole.

Optionally, the pre-processing beam I0 and the second welding beam I2 together form a 'Y'-shaped large deep penetration keyhole 110 around the first welding beam I1.

Specifically, the distance between the pre-processing beam I0 and the first welding beam I1 and the distance between the first welding beam I1 and the second welding beam I2 are generally 0.5 mm to 1 mm. The arrangement of the distance is related to the stability of the deep penetration keyhole 110. If the distance between two groups of laser beams is too small, the opening at the upper end of the deep penetration keyhole 110 may not be large enough, and pores and spatter may still be obvious. If the distance is too large, the deep penetration keyhole 110 may change from a "Y" shape to an independent "W" shape, failing to form an integrated deep penetration keyhole 110, with keyholes of the pre-processing beam I0 and first welding beam I1 interfering with each other.

Optionally, as shown in FIG. 34, the laser welding head 3 and the wire feeding structure 160 are arranged obliquely. The angle between the axis of the laser welding head 3 and the vertical direction is 5° to 10°, thus guaranteeing that during high-power welding, reflected light may not damage the lenses or the laser after directly entering the laser welding head 3.

Optionally, the welding process parameters of the laser welding head 3 are set. The adjustment range of the welding defocus amount is from -10 mm to +10 mm. An increase in the welding defocus amount may lead to a decrease in the melting depth and an increase in the laser power density at an in-focus position. Therefore, an increase in the welding defocus amount can improve the stability of the welding process and optimize the formation of the weld seam 150. The welding speed is 0.3 m/min to 3 m/min. The magnitude of the welding speed can not only affect the width of the weld seam 150 but also affect the melting depth. An excessively low welding speed may lead to excessive heat input per unit time, making the welding state unstable. An excessively high welding speed may lead to insufficient welding fusion. The specific welding speed needs to be adjusted according to actual welding results and welding cycle time.

In summary, the present application can solve problems in the existing laser welding processes of low welding efficiency, low energy utilization, unfused welding pores and sidewalls, and unstable welding melting depth. Additionally, this welding method does not require pre-grooving the to-be-welded workpiece or cleaning the workpiece before welding, thereby effectively improving welding efficiency. The parallel welding with multiple groups of laser beams improves the tolerance for an assembly gap.

## Claims

1. An optical fiber laser device, comprising a plurality of laser modules, a laser output head, and a control apparatus, wherein
output optical fibers of the plurality of laser modules are symmetrically bundled to form an array optical fiber;
the array optical fiber is coupled and connected to the laser output head, and output lasers of a plurality of lasers are emitted through the laser output head to form a preset light spot; and
the control apparatus is connected to the plurality of lasers separately and provides a light spot editing interface, and the control apparatus is used for controlling light emission and output power of the plurality of lasers and modulating a shape of the preset light spot and energy distribution of the preset light spot.

2. The optical fiber laser device according to claim 1, wherein the laser output head comprises:
a housing, wherein the housing is provided with a cooling cavity axially penetrating through the housing;
an end cap, wherein the end cap is partially or completely accommodated in one end of the cooling cavity;
a first fixing member located at the other end of the cooling cavity and fixedly mounted on the housing, wherein the first fixing member is provided with a through hole, and
wherein one end of the array optical fiber is arranged in a predetermined shape and fixedly connected to the end cap, and an end of the array optical fiber facing away from the end cap passes through the through hole and the housing and is fixedly connected to the first fixing member; and
at least one first limit member accommodated in the cooling cavity, wherein the array optical fiber is movably inserted in the at least one first limit member.

3. The optical fiber laser device according to claim 2, wherein a first limit member of the at least one first limit member is provided with a limit hole axially penetrating through the first limit member, and the limit hole is adapted to a shape of the array optical fiber; and/or
the at least one first limit member is axially rotatably disposed between the end cap and the first fixing member; and/or
a plurality of first limit members are provided and are spaced apart according to a preset distance so that a shaking amplitude of the array optical fiber is decomposed into a plurality of smaller shaking amplitudes; and/or
one end of the first fixing member is provided with a mounting structure and at least one glue dispensing hole; the first fixing member is directly fixed and mounted on the housing via the mounting structure; the glue dispensing hole communicates with the through hole and is used for injecting glue to fix an optical fiber array in the first fixing member, and the glue dispensing hole is in corporation with a sealing member to seal the cooling cavity and forms a seal on the cooling cavity through the sealing member; and/or
a surface of the end cap and an inner wall of the cooling cavity accommodating the end cap are each provided with an alignment structure, and the end cap is fixed on the one end of the cooling cavity at a preset angle through the alignment structure.

4. The optical fiber laser device according to claim 2, wherein the laser output head further comprises a second limit member axially penetrating through the laser output head, and the second limit member is at least partially or completely around a periphery of the at least one first limit member; and
wear resistance of a material of the at least one first limit member is higher than wear resistance of a material of the second limit member, and/or a first limit member of the at least one first limit member adjacent to the end cap is made of a same material as the second limit member or is integrally formed with the second limit member.

5. The optical fiber laser device according to claim 1, wherein the control apparatus further comprises a first control module and a second control module, the first control module is used for controlling a translation of the preset light spot in a direction of an X axis of a processing surface, the second control module is used for controlling a translation of the preset light spot in a direction of a Y axis of the processing surface, and the first control module and the second control module are in cooperation with each other simultaneously to implement an oblique movement of the preset light spot at any angle on a first processing surface formed by the X axis and the Y axis.

6. The optical fiber laser device according to claim 5, wherein the control apparatus further comprises a third control module used for controlling a movement of the preset light spot in a direction of a Z axis of the processing surface; and the first control module, the second control module, and the third control module are in cooperation to implement an oblique movement of the preset light spot at any angle on a second processing surface formed by the X axis and the Z axis or a third processing surface formed by the Y axis and the Z axis on the processing surface, or a movement of the preset light spot from the first processing surface to a second processing surface formed by the X axis and the Z axis or a third processing surface formed by the Y axis and an Z axis.

7. The optical fiber laser device according to claim 1, wherein the array optical fiber formed by the output optical fibers is distributed in a centrally symmetric manner, the output optical fibers has a number of (2N - 1) × 6 + 1, and N ≥ 1, and/or
the shape of the preset light spot is at least one of a circular light spot, an annular light spot, a strip-shaped light spot, a multi-point light spot, or a special-shaped light spot, and the energy distribution of the preset light spot is at least one of a Gaussian distribution, an annular distribution, or a multi-point distribution.

8. A laser processing system, comprising:
a multi-beam laser and a depth-of-focus adjustment unit, wherein
the multi-beam laser comprises a plurality of laser modules, output optical fibers of the plurality of laser modules are arranged in an array, and array laser beams output by the output optical fibers form a processing beam; and
the depth-of-focus adjustment unit comprises a plurality of depth-of-focus coarse adjustment modules and a plurality of depth-of-focus fine adjustment modules, the plurality of depth-of-focus coarse adjustment modules are connected to the plurality of laser modules respectively to control a light spot size of the processing beam by controlling on-off of each laser; and the plurality of depth-of-focus fine adjustment modules are connected to the plurality of laser modules respectively to control an energy distribution ratio of the processing beam by controlling power of each laser.

9. The laser processing system according to claim 8, wherein the depth-of-focus adjustment unit synchronously controls the plurality of depth-of-focus coarse adjustment modules and the plurality of depth-of-focus fine adjustment modules to control a depth of focus change of the processing beam to be greater than or equal to 10 mm; and/or
adjustment precision of the plurality of depth-of-focus coarse adjustment modules is less than or equal to 10 mm, and adjustment precision of the plurality of depth-of-focus fine adjustment modules is less than or equal to 2 mm.

10. The laser processing system according to claim 8, wherein a depth of focus of the processing beam and the light spot size satisfy the following formula: $DOF = \frac{π d}{2 λ {M}^{2}}$;
wherein DOF denotes the depth of focus; d denotes a light spot diameter of the processing beam; λ denotes a wavelength of the processing beam; and M² denotes a beam quality factor of the processing beam.

11. A laser welding method, comprising:
providing a to-be-welded material, wherein the material comprises a first welding section and a second welding section having different welding thicknesses;
providing a welding beam having a first depth of focus to perform welding along a welding path of the first welding section with the first depth of focus; and
simultaneously adjusting output power of the welding beam and at least one of a light spot diameter of the welding beam or energy distribution of a light spot of the welding beam to enable the welding beam to be converted from the first depth of focus to a second depth of focus, and performing welding along a welding path of the second welding section with the second depth of focus.

12. The laser welding method according to claim 11, wherein the to-be-welded material further comprises a thickness transition section, and the laser welding method further comprises:
according to a thickness of the thickness transition section, simultaneously and gradually adjusting the output power of the welding beam and at least one of the light spot diameter of the welding beam or the energy distribution of the light spot of the welding beam to enable a depth of focus of the welding beam to change synchronously with the thickness of the thickness transition section.

13. A laser welding method, comprising:
configuring a laser combination according to a condition of a to-be-welded workpiece, wherein the laser combination is composed of at least a first welding beam and a second welding beam; and
simultaneously or separately outputting the first welding beam and the second welding beam, wherein the first welding beam is displaced relative to a material along a preset welding path and acts on the material to form a deep penetration keyhole, and the second welding beam acts on a rear wall of the keyhole for maintaining opening stability of the keyhole.

14. The laser welding method according to claim 13, wherein a welding beam further comprises a third welding beam, the third welding beam and the second welding beam act on the rear wall of the keyhole together to maintain the opening stability of the keyhole, each of power of the second welding beam and power of the third welding beam is less than or equal to power of the first welding beam and exceeds an evaporation threshold of the material; and/or
the first welding beam, the second welding beam, and the third welding beam act on the material in a strip-shaped array; and/or
the first welding beam, the second welding beam, and the third welding beam act on the material in a triangular array; and each of a transverse acting width of the second welding beam and a transverse acting width of the third welding beam is smaller than a light spot size of the first welding beam.

15. The laser welding method according to claim 13, before simultaneously or separately outputting the first welding beam and the second welding beam, further comprising:
outputting a pre-processing beam, wherein a width of the pre-processing beam covers at least completely a weld width for cleaning an oxide layer and dirt on a to-be-welded surface; and generating, on a surface of the to-be-welded workpiece, a stable molten pool with a shallow melting depth and a large melting area;
wherein the width of the pre-processing beam is greater than a width of the first welding beam and a width of the second welding beam, power of the pre-processing beam is less than power of the first welding beam and power of the second welding beam, and the pre-processing beam and the second welding beam surround the first welding beam to form a 'Y'-shaped large keyhole.
